**Europäisches Patentamt**

**(19) European Patent Office**

**Office européen des brevets**

(11) Publication number : **0 335 201 B1**

# (12) EUROPEAN PATENT SPECIFICATION

(45) Date of publication of patent specification :
16.09.92 Bulletin 92/38

(51) Int. Cl.⁵ : **F16F 9/02, F16F 9/49, B60K 5/12**

(21) Application number : **89104807.6**

(22) Date of filing : **17.03.89**

(54) **Passive vibration damper, in particular for connecting an engine to a vehicle body.**

(30) Priority : **22.03.88 IT 6724888**

(43) Date of publication of application :
**04.10.89 Bulletin 89/40**

(45) Publication of the grant of the patent :
**16.09.92 Bulletin 92/38**

(84) Designated Contracting States :
**DE ES FR GB SE**

(56) References cited :
**EP-A- 0 160 277**
**CH-A- 294 808**
**FR-A- 2 137 981**
**FR-A- 2 349 767**
**US-A- 4 342 447**
**US-A- 4 518 058**

(73) Proprietor : **FIAT AUTO S.p.A.**
**Corso Giovanni Agnelli 200**
**I-10135 Torino (IT)**

(72) Inventor : **Maggioni, Virginio**
**Via Stazione, 55**
**IT-10090 Rosta (IT)**
Inventor : **Titolo, Andrea**
**Via Canova, 43**
**IT-10100 Torino (IT)**

(74) Representative : **Jorio, Paolo et al**
**STUDIO TORTA Società Semplice Via Viotti 9**
**I-10121 Torino (IT)**

## Description

The present invention relates to a passive vibration damper, particularly suitable for interposing as a connection element between a vehicle body and its power unit to prevent vibration produced by the engine being transmitted to the vehicle body. In automobiles with high-power engines such as grand touring automobiles, the engine is fixed to the vehicle body not only at the floor but also at other points such as at the upper cross-member. As the engine vibrates strongly when in use, ie undergoes small rapid random movements relative to the vehicle body, it is necessary to use devices for connecting the engine to the body which on the one hand are able to allow these movements to take place so as not to induce stresses in the body, and on the other hand are able to rapidly damp vibrations so as to prevent triggering of possible resonance phenomena and/or to prevent or reduce their transmission to the vehicle body, which would cause discomfort to the vehicle users.

For this purpose, known vehicles use passive devices consisting of hangers provided with elastomer bearings, but the results obtainable with such devices are not completely satisfactory. In this respect, although they limit the transmission of stresses to the vehicle body and the triggering of resonance phenomena, vibration transmission to the vehicle body remains too high to provide proper comfort for the user, even though the transmitted vibration is damped in terms of amplitude and frequency.

From FR-A-2 349 767 is known a passive damper having the function of shock-absorber and of gas-spring, comprising a cylinder full of pressurized gas in which a piston provided with through axial holes travels. Such a system is however not efficient for the aforementioned purpose, because has poor vibration damping capacity.

From EP-A-160 277 is also known an active damper, wherein a fluid under pressure is fed inside a cylinder in which a piston travels.

This system is more efficient than that of FR-A-2 349 767 but depends on energy produced on board the vehicle.

An object of the invention is to provide a damper device which is able to connect two mechanical members together in such a manner as to allow them to undergo relative movement, has high vibration damping capacity and is able to connect an engine to a vehicle body so as to ensure considerable comfort for the vehicle users.

A further object of the invention is to provide a passive damper device which is able to provide the required damping by virtue only of its own structure and does not depend on the absorption of the produced energy on board the vehicle. Said object is attained according to the invention by a passive vibration damper for mechanically connecting together two members between which there is the possibility of relative movement, as defined in claim 1.

The invention will be more apparent from the non-limiting description of one embodiment thereof given hereinafter with reference to the accompanying drawings in which:

Figure 1 is a diagrammatic view of a vehicle provided with the damper according to the invention;

Figure 2 is a longitudinal side sectional view of a damper according to the invention;

Figure 3 is a front view of a detail of the damper of Figure 2;

Figures 4 and 5 show two different working positions of the damper of Figure 2.

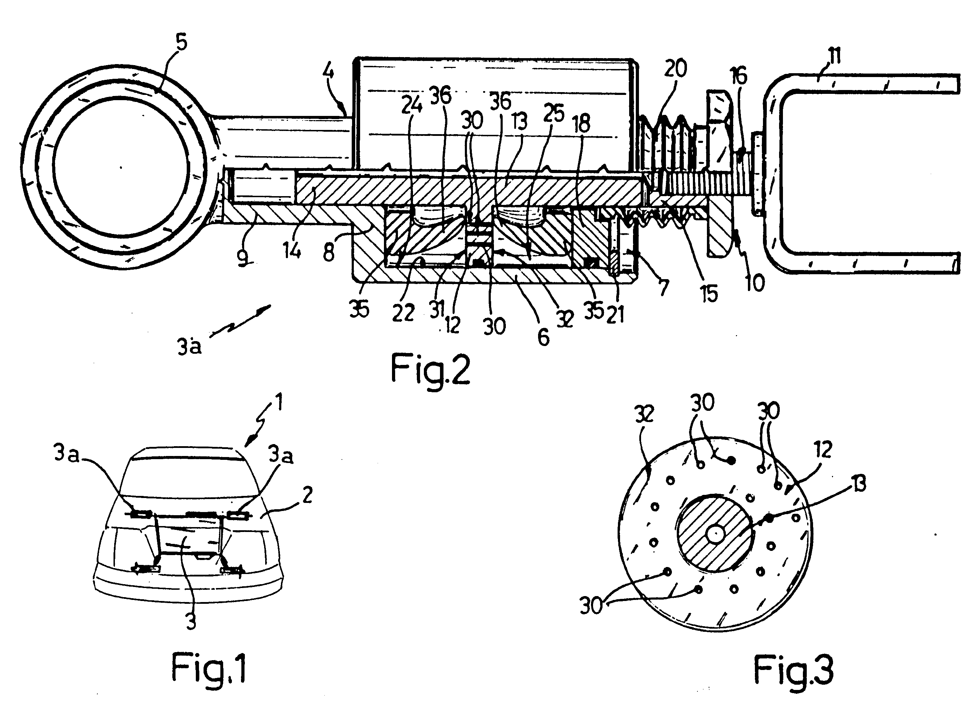

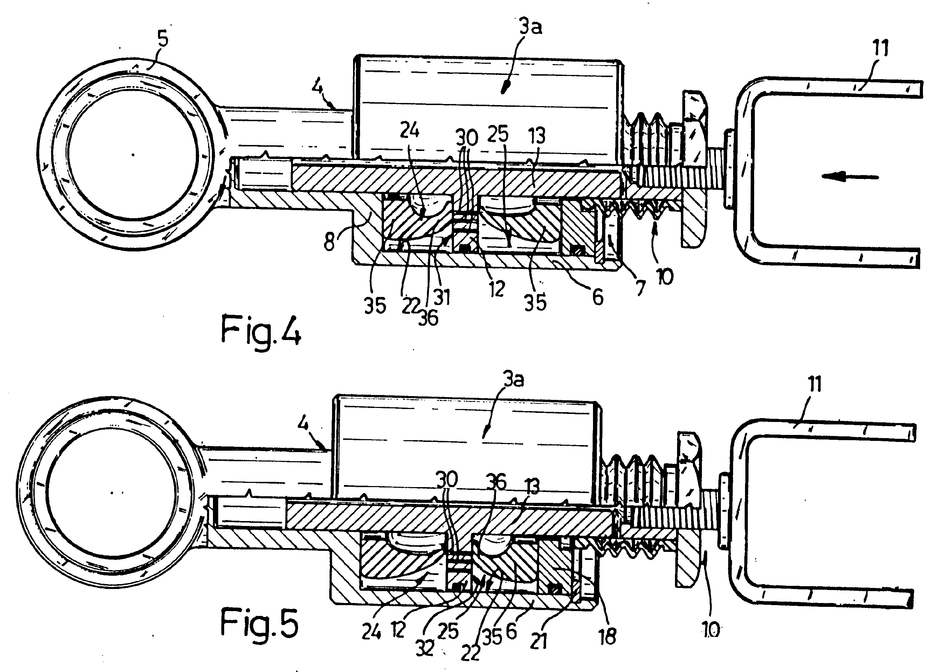

In Figures 1 to 3, the reference numeral 1 indicates a vehicle which in this case is an automobile, comprising a known body 2 and engine 3 which are connected together in such a manner as to be able to undergo small relative movements by one or more passive dampers 3a, and in this particular case by two dampers 3a which secure the engine 3 to the front upper part of the body 2. In Figure 2 a damper 3a is shown in section in its rest position, whereas in Figures 4 and 5 the same damper is shown in two opposite working positions. With reference to these latter figures, the damper 3a comprises a first element to be rigidly fixed to the vehicle body 2 in known manner by a ring 5, the element 4 consisting of a hollow cylinder at least partly closed in a fluid-tight manner and filled with a gaseous fluid such as air, it comprising a cup-shaped cylindrical member 6 provided with an open mouth end 7 and an end wall 8 distant from the mouth 7, and a tubular end portion 9 projecting outwardly and axially from the wall 8. The damper 3a also comprises a second element 10 for rigidly fixing to the engine 3 in known manner, such as by a fork 11, and consisting of a piston 12 housed slidably in a fluid-tight manner in the cylinder 4 and a rod 13 mounted slidably in a fluid-tight manner in the cylinder 4 and preferably constructed integrally with the piston 12 and rigidly supporting it at its centre. One end 14 of the rod 13 is guided to slide within the tubular portion 9, whereas its opposite symmetrical end 15 projects through the mouth 7 and is rigidly connected by a known screw adjustment mechanism 16 to the fork 11. The mouth 7 which in one possible embodiment of the invention, not shown for simplicity, can be closed in a fluid-tight manner by a simple fixed cover rigid with the cylinder 4, is closed in the non-limitative illustrated embodiment of the invention by an annular element or block 18 which is slidingly traversed by the rod 13 and is disposed so that it can slide axially in a fluid-tight manner in the cup-shaped member 6 at the end distant from the wall 8. A protection bellows 20 is disposed to give protection to the rod 13 and/or partial or total sealing between this and the block 18. The block 18 is halted rigidly with the member 6 by a split ring 21 mounted just inside the mouth 7 to act as a stop shoulder and against which the block 18 comes to rest.

The piston 12 slidably engages the inner cylindrical surface 22 of the member 6 and divides its interior into two chambers 24 and 25, the volume of which varies in accordance with the axial position of the piston 12 in the cylinder 4, in that the chambers 24 and 25 are located on opposite sides of the piston 12, with the chamber 24 defined axially in length between the piston 12 and the end 24, and the chamber 25 between the piston 12 and block 18. When the piston 12 moves towards the wall 8, the chamber 24 which is traversed centrally and axially over its entire length by the end 14 of the rod 13 reduces in volume whereas the chamber 25 increases in volume by an equal amount as it is also traversed centrally and axially by the rod 13 and consequently has a cross-section of identical size to that of the chamber 24. In contrast, when the piston 12 moves towards the mouth 7, the volume of the chamber 25 reduces and that of the chamber 24 increases by an equal amount, as the variation in the axial position of the piston 12 induces an equal variation in the axial length of both of the chambers 24 and 25, which thus produces a volume variation of equal amount but opposite sign therein.

According to the invention, the piston 12 is provided with a plurality of axial through bores 30 located in different radial positions (Figure 3) and connecting the chambers 24 and 25 together. Specifically, the bores 30 are of small diameter such as to offer considerably resistance to the passage of a gaseous fluid through them, ie are able to determine a very high pressure drop in a gaseous fluid in passing between the chambers 24 and 25. The bores 30 open into the respective opposing front faces 31 and 32 of the piston 12 and are distributed at a constant circumferential pitch along different diameter circles, or alternatively, as shown in Figure 3, are distributed along a spiral linear path. According to the invention, the chambers 24 and 25 each house at least one respective deformable seal element 35 inserted into them by pressing and cooperating with the piston 12 to isolate from the outside in a fluid-tight manner that radially outer portion of the chambers which faces the bores 30 and lies between the surface 22, the faces 31 and 32 of the piston 12 and the elements 35 themselves, so as to progressively close the bores 30 in accordance with the axial position of the piston 12. Specifically, each chamber 24 and 25 houses internally, coaxially with the piston 12, a corresponding annular elastomer element 35, for example of heat-resistant rubber, disposed against a travel stop member located opposite the piston 12 and defined in the chamber 24 by the wall 8, and in the chamber 25 by the ring 21, and against which the corresponding element 35 rests by way of the block 18. Each element 35 is provided with a deformable annular front lip 36 formed as a curved sleeve tapering towards its free end and shaped overall as a barrel, and projecting axially towards the piston 12 to operate by contact with a respective front face 31 or 32 thereof, against which each lip 36 presses preferably with a predetermined equal pressure when the piston 12 is in its rest position of Figure 2, ie substantially in the middle of the cylindrical member 6, the lips being constructed so that when in their undeformed state they are of equal axial length, this length being greater than the maximum length which each chamber 24 and 25 can attain during the movement of the piston 12.

When in use, the elements 35 are mounted on the rod 13 and inserted together with this into the cylinder 4 and tightened down under predetermined pressure by inserting and locking in position the block 18 to close the mouth 7 so as to elastically deform the lips 36, which then rest with predetermined equal pressure against the piston 12 in a position radially more inwards than the most inner of the bores 30, to retain the piston in the position shown in Figure 2. With reference to Figures 4 and 5, when the vibration induced by the engine 4 causes the fork 11 to move in the direction of the arrow (Figure 4), the piston 12 moves towards the wall 8 to reduce the volume of the chamber 24 and increase that of the chamber 25. The air or other gaseous fluid contained in that portion of the chamber 24 isolated under fluid-tight conditions by the respective element 35 is therefore compressed and as soon as its pressure is sufficient to overcome the pressure drop through the bores 30 it begins to flow into the chamber 25 to compensate its increases in volume. This pressurisation of the air in the chamber 24 however produces a thrust on the piston 12 which tends to oppose its movement towards the wall 8 so that the piston 12 is firstly slowed down until it stops after which its movement is reversed. The action of the air pressure in the chamber 24 is augmented by the elastic thrust of the gasket 35 situated in this chamber. In this respect the gasket 35 is squeezed against the wall 8 by the movement of the piston 12, and therefore deforms elastically to exert in the manner of a spring an elastic resistance which is a function of its own elastic constant and is greater the greater the extent to which it is squeezed, ie the closer the piston 12 approaches the wall 8. Finally, the force resulting from the pressurisation of the air in the chamber 24 produced by the movement of the piston 12 is accentuated by the fact that as the lips 36 are curved, the lip 36 of that element 35 in the chamber 24 increases its curvature as the element 35 is squeezed and consequently positions itself with its extrados parallel to the face 31 of the piston 12 and against this latter to close part of the bores 30, and specifically firstly the radially more inner bores and then progressively, as the deformation of the element 35 increases, the radially more outer bores until all the bores 30 are closed.

Consequently the cross-sectional area available for the air expelled by the reduction in volume of the chamber 24 to pass to the chamber 25 is progressively reduced until completely nullified, to produce a progressive increase in the pressure drop of the air in the chamber 24. When the air trapped between the piston 12, wall 8, element 35 and surface 22 can no longer pass into the chamber 25, its pressure increases until it becomes so high that it exceeds the thrust on the fork 11 and moves the piston 12 backwards, with consequent progressive reopening of the bores 30 and reduction in the deformation of the element 35, so that the pressure in the chamber 24 and the total thrust on the piston 12 are reduced, with the result that under all conditions the damper 3a rapidly and easily attains an equilibrium position which completely nullifies the consequences of the vibration of the engine 3.

If this vibration is such as to produce a stress in the opposite direction of the fork 11 (Figure 5), the damper 3a behaves exactly as heretofore described, the only difference being that it is now the chamber 25 which reduces in volume so that the air trapped in a fluid-tight manner in that portion thereof between the relative element 35, the surface 22, the block 18 and the piston 12 is compressed and passes into the chamber 24 through the bores 30, which are progressively closed by the curving of the lip 36 of the element 35 housed in the chamber 25, as a result of it being squeezed against the block 18 retained by the ring 21.

The advantages of the invention are apparent from the aforegoing description. The described damper requires no active control systems, is of simple and economical construction, has very high efficiency and is completely self-adjusting, the described structure forming an intrinsically balanced pneumatic system. The assembly of the damper according to the invention is also simple and it is not necessary to ensure that a seal exists between the rod 13, the block 18 and the member 6, the seal in the working portion of the chambers 24 and 25 being in all cases ensured by the sealing action of the lips 36 against the piston 12.

## Claims

1. A passive vibration damper (3a) for mechanically connecting together two members (2,3) between which there is the possibility of relative movement, comprising a first and a second element (4,10) which are coupled together in a manner axially slidable relative to each other and are each arranged to be rigidly fixed to one of said members (2,3), said first element consisting of a hollow cylinder (4) filled with a gaseous fluid, and said second element consisting of a rod (13) connected rigidly to a piston (12) housed slidably in a fluid-tight manner in said cylinder (4) in such a manner as to define within this latter a first (24) and a second (25) variable-volume chamber disposed on opposite sides of the piston (12); said piston (12) being provided with a plurality of through axial bores (30) located in different radial positions and arranged to provide communication between said chambers (24,25); characterized in that the chambers (24,25), each housing at least one respective deformable seal element (35) of annular shape cooperating with a surface (31,32) of said piston (12) and a surface (8,18) of the chamber (24,25) to isolate in a fluid-tight manner a radially outer annular portion of said chambers (24,25) which faces said bores (30), and to progressively close said bores (30), by deformation of said seal element (35) in accordance with the axial position of said piston (12).

2. A damper (30) as claimed in claim 1, characterised in that said through axial bores (30) are of such a diameter as to offer appreciable resistance to the passage of gaseous fluid between said chambers (24,25), and are distributed on respective opposing faces (31,32) of said piston (12) along a spiral linear path.

3. A damper (30) as claimed in claim 1, characterised in that said through axial bores (30) are of such a diameter as to offer appreciable resistance to the passage of gaseous fluid between said chambers (24,25), and are distributed on respective opposing faces (31,32) of said piston (12) along circles of different diameter.

4. A damper (30) as claimed in claim 1, 2 or 3, characterised in that said variable volume chambers (24,25) each house in their interior, coaxially to said piston (12), one annular elastomer element (35) disposed against a travel stop (8,21) opposite said piston (12); said elastomer element (35) being provided with a curved deformable annular front lip (36) extending axially towards said piston (12) and cooperating by contact with a respective front face (31,32) thereof.

5. A damper (30) as claimed in any one of the preceding claims, characterised in that the cross-sections of said variable volume chambers (24,25) are of equal size so that the volume variations in these latter induced by axial movements of the piston (12) within the cylinder (4) are always of equal value but of opposite sign.

6. A damper (30) as claimed in any one of the preceding claims, characterised in that said rod (13) extends axially towards both said chambers (24,25) and at its centre rigidly carries said piston (12); said cylinder (4) comprising a cup-shaped member (6) defining said chambers and slidably engaged by said piston (12), and a tubular smaller-diameter end portion (9) projecting outwards from an end wall (8) of said cup-shaped member (6) and in which a corresponding first end of said rod (13) is guided.

7. A damper (30) as claimed in claim 6, characterised in that said first chamber (24) is defined between said piston (12) and said end wall (8) of the cup-shaped member (6), and said second chamber is defined between said piston (12) and an annular block (18) traversed by the second end of said rod (13) and slidably engaged in said cup-shaped member (6) at the end distant from said end wall (8) so as to close the mouth end of said cup-shaped member (6); this latter being provided with a split ring (21) acting as a stop against which said annular block (18) cooperates by contact.

8. A vehicle (1) comprising a body (2) an engine (3) and at least one damper (30) as claimed in one of claims 1 to 7, and which connects said engine (3) to said body (2).

**Patentansprüche**

1. Passiver Schwingungsdämpfer (3a) zur mechanischen Verbindung zweier Bauteile (2, 3), zwischen denen die Möglichkeit einer Relativbewegung besteht, welcher ein erstes und ein zweites Element (4, 10) aufweist, die relativ zueinander axial gleitfähig miteinander verbunden sind und die jeweils so angeordnet sind, daß sie starr auf einem der Bauteile (2, 3) befestigt sind, wobei das erste Element aus einem mit einem gasförmigen Fluid gefüllten Hohlzylinder (4) besteht, und das zweite Element aus einem Stab (13) besteht, der starr an einem Kolben (12) befestigt ist, welcher gleitfähig auf fluiddichte Weise so im Zylinder (4) angeordnet ist, daß er in diesem eine erste Kammer (24) variablen Volumens und eine zweite Kammer (25) variablen Volumens, welche auf gegenüberliegenden Seiten des Kolbens (12) angeordnet sind, bildet, wobei der Kolben (12) mit einer Anzahl durchgehender Axialbohrungen (30) versehen ist, welche in verschiedenen radialen Positionen ausgebildet sind und so angeordnet sind, daß sie einen Austausch zwischen den Kammern (24, 25) ermöglichen, dadurch gekennzeichnet, daß die Kammern (24, 25) jeweils mindestens ein verformbares ringförmiges Dichtungselement (35) aufweisen, welche mit einer Fläche (31, 32) des Kolbens (12) und einer Fläche (8, 18) der Kammer (24, 25) zusammenwirken, um einen radial äußeren ringförmigen Bereich der Kammern (24, 25), der den Bohrungen (30) gegenüberliegt, in fluiddichter Weise zu isolieren, und um die Bohrungen (30) durch Verformung des Dichtungselements (35) gemäß der axialen Stellung des Kolbens (12) fortschreitend zu verschließen.

2. Dämpfer (3a) nach Anspruch 1, dadurch gekennzeichnet, daß die durchgehenden Axialbohrungen (30) einen solchen Durchmesser aufweisen, daß sie dem Durchtritt des gasförmigen Fluids zwischen den Kammern (24, 25) einen spürbaren Widerstand entgegensetzen, und auf jeweils gegenüberliegenden Flächen (31, 32) des Kolbens (12) entlang eines spiralförmigen linearen Weges verteilt sind.

3. Dämpfer (3a) nach Anspruch 1, dadurch gekennzeichnet, daß die durchgehenden Axialbohrungen (30) einen solchen Durchmesser aufweisen, daß sie dem Durchtritt des gasförmigen Fluids zwischen den Kammern (24, 25) einen spürbaren Widerstand entgegensetzen, und auf jeweils gegenüberliegenden Flächen (31, 32) des Kolbens (12) entlang Kreisen von verschiedenen Durchmessern verteilt sind.

4. Dämpfer (3a) nach Anspruch 1, 2 oder 3, dadurch gekennzeichnet, daß die Kammern (24, 25) variablen Volumens jeweils in ihrem Innern, koaxial zum Kolben (12), ein ringförmiges Elastomerelement (35) aufweisen, welches gegen einen gegenüber dem Kolben (12) liegenden Bewegungsstopper (8, 21) angeordnet ist, wobei das Elastomerelement (35) mit einer gekrümmten, verformbaren, ringförmigen Frontschnauze (36) versehen ist, welche sich axial in Richtung des Kolbens (12) erstreckt und durch Berührung mit einer jeweiligen Frontfläche (31, 32) desselben zusammenwirkt.

5. Dämpfer (3a) nach einen der vorstehenden Ansprüche, dadurch gekennzeichnet, daß die Querschnitte der Kammern (24, 25) variablen Volumens gleiche Größe aufweisen, so daß die durch die Axialbewegungen des Kolbens (12) innerhalb des Zylinders (4) verursachten Volumenänderungen in diesen Kammern stets gleichen Betrages aber entgegengesetzten Vorzeichens sind.

6. Dämpfer (3a) nach einem der vorstehenden Ansprüche, dadurch gekennzeichnet, daß der Stab (13) sich axial in Richtung beider Kammern (24, 25) erstreckt und in seiner Mitte den Kolben (12) starr haltert, wobei der Zylinder (4) ein becherförmiges Teil (6), welches die Kammern bildet und in das der Kolben (12) gleitfähig eingreift, und einen rohrförmigen Endbereich (9) kleineren Durchmessers, der von einer Endwand (8) des becherförmigen Teils (6) nach außen vorsteht, und in dem ein entsprechendes erstes Ende des Stabes (13) geführt wird, aufweist.

7. Dämpfer (3a) nach Anspruch 6, dadurch gekennzeichnet, daß die erste Kammer (24) zwischen dem Kolben (12) und der Endwand (8) des becherförmigen Teils (6) gebildet ist, und die zweite Kammer zwischen dem Kolben (12) und einem ringförmigen Block (18), welcher vom zweiten Ende des Stabes (13) durchquert wird und der gleitfähig in das becherförmige Teil (6) am von der Endwand (8) entfernten Ende so eingreift, daß das Öffnungsende des becherförmigen Teiles (6) verschlossen wird, gebildet wird, wobei dieses letztere mit einem Spaltring (21) vorgesehen ist, welcher als Stopper wirkt, gegen den der ringförmige Block (18) durch Kontakt zusammenwirkt.

8. Fahrzeug (1) mit einer Karosserie (2), einem Motor (3) und mindestens einem Dämpfer (3a), wie er in einem der Ansprüche 1 bis 7 beansprucht ist, und welcher den Motor (3) mit der Karosserie (2) verbindet.

## Revendications

1. Amortisseur passif de vibrations (3a) destiné à raccorder mécaniquement deux éléments (2,3) entre lesquels existe le risque d'un déplacement relatif, comprenant des premier et second éléments (4,10) qui sont accouplés entre eux de manière à pouvoir glisser axialement l'un par rapport à l'autre et sont tous deux disposés de manière à être fixés rigidement à l'un desdits éléments (2,3), ledit premier élément étant constitué par un cylindre creux (4) rempli par un fluide gazeux et ledit second élément étant constitué par une tige (13) raccordée rigidement à un piston (12) logé de manière à pouvoir glisser, d'une manière étanche aux fluides, dans ledit cylindre (4) de manière à définir, dans ce dernier, une première chambre (24) et une seconde chambre (25) à volume variable, disposées sur des côtés opposés du piston (12); ledit piston (12) étant pourvu d'une pluralité de trous traversants axiaux (30) situés dans différentes positions radiales et disposés de manière à établir une communication entre lesdites chambres (24,25); caractérisé en ce que les chambres (24,25), qui logent chacune au moins un élément d'étanchéité respectif déformable (35) de forme annulaire, coopèrent avec une surface (31,32) dudit piston (12) et une surface (8,18) de la chambre (24,25) pour isoler, d'une manière étanche aux fluides, une partie annulaire, extérieure du point de vue radial, desdites chambres (24,25), qui est située en vis-à-vis desdits trous (30), et fermer progressivement lesdits trous (30) moyennant une déformation dudit élément d'étanchéité (35) en fonction de la position axiale dudit piston (12).

2. Amortisseur (30) selon la revendication 1, caractérisé en ce que lesdits trous traversants axiaux (30) possèdent un diamètre offrant une résistance notable au passage d'un fluide gazeux entre lesdites chambres ( 24, 25 ) et sont répartis sur des faces opposées respectives (31,32) dudit piston (12), le long d'un trajet linéaire spiral.

3. Amortisseur (30) selon la revendication 1, caractérisé en ce que lesdits trous traversants axiaux (30) possèdent un diamètre tel qu'ils opposent une résistance notable au passage d'un fluide gazeux entre lesdites chambres (24,25) et sont répartis sur des faces respectives opposées (31,32) dudit piston (12) le long de cercles ayant des diamètres différents.

4. Amortisseur (30) selon la revendication 1, 2 ou 3, caractérisé en ce que lesdites chambres à volume variable (24,25) logent chacune, dans leur intérieur, coaxialement audit piston (12), un élément élastomère annulaire (35) placé contre une butée de déplacement (8,21) située à l'opposé dudit piston (12); ledit élément élastomère (35) étant pourvu d'une lèvre frontale annulaire courbe déformable (36) qui s'étend axialement en direction dudit piston (12) et coopère par contact avec une face avant respective (31,32) de ce piston.

5. Amortisseur (30) selon l'une quelconque des revendications précédentes, caractérisé en ce que les sections transversales desdites chambres à volume variable (24,25) possèdent des tailles identiques de sorte que les variations de volume provoquées dans ces chambres par des déplacements axiaux du piston (12) dans le cylindre (4) possèdent toujours une même valeur, mais avec des signes opposés.

6. Amortisseur selon l'une quelconque des revendications précédentes, caractérisé en ce que ladite tige (13) s'étend axialement en direction desdites deux chambres (24,25) et supportent rigidement, en son centre, ledit piston (12); ledit cylindre (4) comprenant un élément en forme de coupelle (6) définissant lesdites chambres et avec lequel engrène, avec glissement, ledit piston (12), et une partie d'extrémité tubulaire (9) de diamètre inférieur, qui fait saillie vers l'extérieur à partir d'une paroi d'extrémité (8) dudit élément en forme de coupelle (6) et dans lequel une première extrémité correspondante de ladite tige (13) est guidée.

7. Amortisseur (30) selon la revendication 6, caractérisé en ce que ladite première chambre (24) est définie entre ledit piston (12) et ladite paroi d'extrémité (8) de l'élément en forme de coupelle (6), et ladite seconde chambre est définie entre ledit piston (12) et un bloc annulaire (18) traversé par la seconde extrémité de ladite tige (13) et engrenant avec possibilité de glissement dans ledit élément en forme de coupelle (6) à l'extrémité distante de ladite paroi d'extrémité (8) de manière à fermer l'extrémité d'embouchure dudit élément en forme de coupelle (6); ce dernier étant équipé d'une bague fendue (21) agissant en tant que butée avec laquelle ledit bloc annulaire (18) coopère en venant en contact entre cette butée.

8. Véhicule (1) comprenant une carrosserie (2), un moteur (3) et au moins un amortisseur (3a) tel que revendiqué dans l'une des revendications 1 à 7 et qui raccorde ledit moteur (3) à ladite carrosserie (2).

Fig.1

Fig.2

Fig.3

Fig.4

Fig.5